Europäisches Patentamt

European Patent Office

Office européen des brevets

(19)

(11) Publication number: **0 344 958**
A1

## EUROPEAN PATENT APPLICATION

(12)

(21) Application number: 89305178.9

(22) Date of filing: 23.05.89

(51) Int. Cl.⁴: **G11B 21/08** , **G11B 5/55** , **G11B 7/08**

(30) Priority: 31.05.88 JP 133625/88

(43) Date of publication of application:
06.12.89 Bulletin 89/49

(84) Designated Contracting States:
DE FR GB

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Ogawa, Tomihisa c/o Patent Division**
**Kabushiki Kaisha Toshiba 1-1 Shibaura**
**1-chome**
**Minato-ku Tokyo(JP)**

(74) Representative: **Freed, Arthur Woolf et al**
**MARKS & CLERK 57-60 Lincoln's Inn Fields**
**London WC2A 3LS(GB)**

(54) Head driving circuit.

(57) A voice coil motor (5) is provided for moving a head for reading information from or writing it on a disk. A driving circuit supplies current to the voice coil motor in response to a first control signal (ACTDRV) and is designed to change a gain of the driving circuit in response to a second control signal (GAINCUT). The gain of the driving circuit is, therefore, changed in response to the second control signal in a manner to be switched from a moving control mode to a position control mode or vice versa.

**FIG. I**

EP 0 344 958 A1

## Head Driving Circuit

The present invention relates to a head driving circuit used for a magnetic disk unit or the like.

In general, an information processing apparatus such as a personal computer employs an information recording and reproducing unit such as a magnetic disk unit or an optical disk unit as an external storage unit.

For instance, the magnetic disk unit has a head positioning mechanism which serves to position a magnetic head loaded on a carriage assembly at a given position on a recording surface of a magnetic disk when a command is issued from a personal computer.

The moving system of such a carriage assembly can employ a swing arm type or a linear type. The driving system used in the type employs a voice coil motor or a stepping motor.

A voice coil motor driving circuit for the voice coil motor is done largely in two modes, that is, a moving (speed) control mode and a track-following (position) control mode.

The foregoing conventional voice coil motor driving circuit, in the moving control mode, must supply larger exciting current to an exciting coil in a moving control mode. It results in providing the signal (ACTDRV) for driving the voice coil motor with a relatively large signal voltage waveform amplitude.

On the other hand, in the track-following control mode, the voice coil motor driving circuit supplies exciting current equal to essentially zero to the exciting coil. It results in providing the signal (ACTDRV) for driving the voice coil motor with a relatively small signal voltage waveform amplitude.

And, the voice coil motor driving circuit is required to achieve the operation accuracy, especially in the track-following control mode.

However, various kinds of conditions may cause variations in some elements such as resistors used in the voice coil motor driving circuit. In this case, a dead band and a gain are made less stable, so that the magnetic head loaded on the carriage assembly is positioned less accurately. It may result in disabling stable and reliable recording or reproducing of information on a recording medium.

The present invention is designed to overcome the foregoing disadvantage, and it is an object of the invention to provide a head driving circuit which can stably and reliably record or reproduce information on a recording medium.

To achieve the object, the invention comprises a voice coil motor for moving a head for reading information from a disk or writing it thereon, a driving means for supplying current to the voice coil motor in response to a first control signal, and a gain control means for changing a gain of the driving means in response to a second control signal.

According to the head driving circuit of the invention, the gain control means can switch the gain of the driving means in a stepwise manner, thereby stably positioning a head. It can stably and reliably record information on a recording medium or reproduce it therefrom. Moreover, since this head driving circuit can avoid an adverse effect resulting form variations of elements such as resistors and of an input offset voltage of a power operational amplifier, it can endure less accurate elements, resulting in contributing on lowering the overall cost.

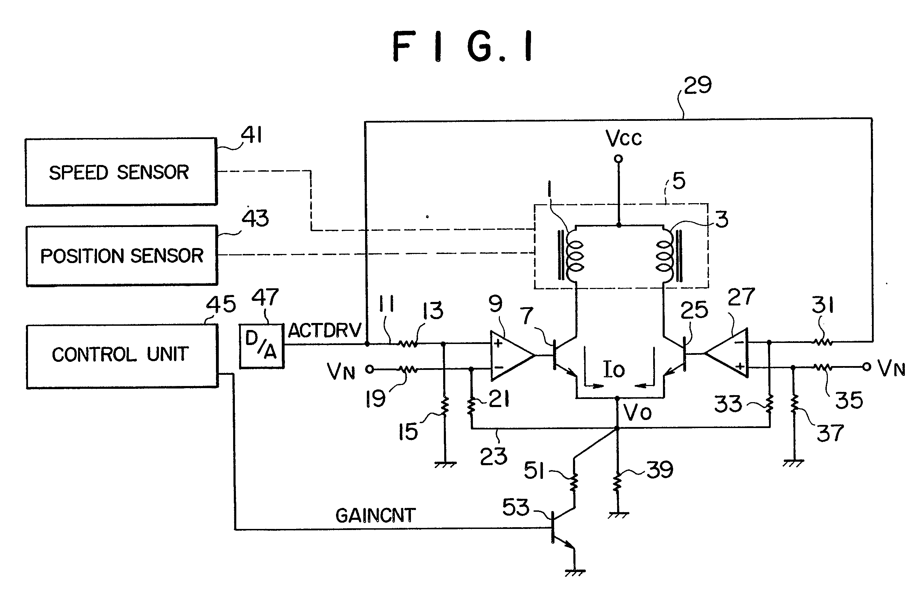

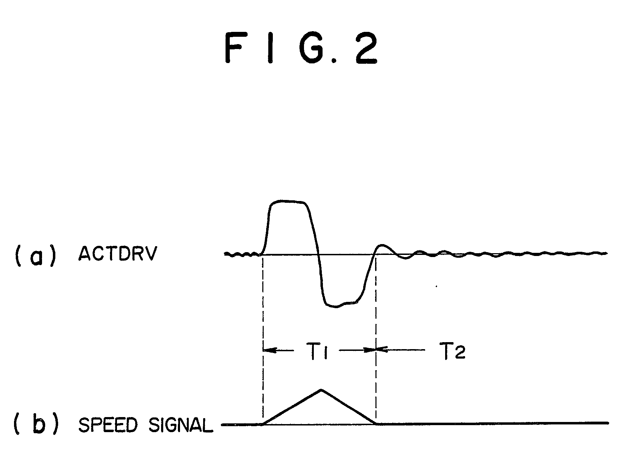

Fig.1 is a circuit diagram showing a voice coil motor driving circuit showing one embodiment in which the invention applied to a magnetic disk unit; and Fig.2 is a circuit diagram showing a voice coil motor driving circuit used in a conventional magnetic disk unit.

Hereafter, one embodiment of the invention will be described in detail with reference to the drawings.

Fig.1 shows one embodiment of a voice coil motor driving circuit in which the invention is applied to a magnetic disk unit

As shown, the voice coil motor driving circuit comprises a voice coil motor 5 equipped with a center tap containing exciting coils 1 and 3.

On the exciting coil 1 side of the voice coil motor 5 is connected a collector of the transistor 7 for controlling the amount of the exciting current $I_0$ supplied from a reference power source $V_{cc}$. A base of the transistor 7 is connected to a power operational amplifier 9.

At a non-reverse input terminal( + ) of the power operational amplifier 9 are connected a line 11 for transferring a positive polarity signal of the signal ACTDRV to be supplied from a control unit to be described later, and a resistor 13 for defining a gain of the voice coil motor driving circuit. At the non-reverse input terminal( + ) is connected a resistor 15 for defining the gain of the voice coil motor driving circuit.

At a reverse input terminal(-) thereof is connected a built-in reference power source VN through a resistor 19 for defining the gain of the voice coil motor driving circuit. At the reverse input terminal(-) are connected a resistor 21 for defining the gain of the voice coil motor driving circuit and a line 23.

The resistors 13 and 19 respectively have r11 values, and the resistors 15 and 12 respectively have r12 values.

On the exciting coil 3 side of the voice coil motor 5 is connected a collector of the transistor 25 for controlling the amount of the exciting current $I_0$ to be supplied from the reference power source $V_{cc}$ to the exciting coil 3. A base of the transistor 25 is connected to a power operational amplifier 27.

At a reverse input terminal(-) of the power operational amplifier 27 are connected a resistor 31 for defining a gain of the voice coil motor driving circuit and a line 29 for transferring a negative polarity signal of the signal ACTDRV. At a reverse input terminal(-) of the power operational amplifier is connected to a resistor 33.

At a non-reverse input terminal(+) thereof is connected a built-in reference power source VN through a resistor 35 for defining a gain of the voice coil motor driving circuit. And, at the non-reverse input terminal(+) is connected a resistor 37 for defining the gain of the voice coil motor driving circuit.

The resistors 31 and 35 respectively have r21 values, and the resistors 33 and 37 respectively have r22 values.

And, a resistor 39 whose resistance is R is connected to each emitter of the transistors 7 and 25 and the line 23.

One end of the resistor 39 is connected in parallel with a resistor 51 whose resistance is $R_A$. The other end of the resistor 51 is connected to the ground with a transistor 53. A control unit 45 supplies a signal GAINCUT to the base of the transistor 53 in such a way that the transistor 53 is conductive in case of a high-level signal GAINCUT and is not conductive in case of a low-level one.

A speed sensor 41 and a position sensor 43 respectively detect a speed and a position of a head (not shown) and send them to the control unit 45. In response to these signals, the control unit 45 sends a signal ACTDRV for driving a head through a D/A converter 47. The signal GAINCUT is at low level in a track-following control mode and at high level in a moving control mode.

The voice coil motor driving circuit having the foregoing arrangement is operated as follows.

The control unit 45 applies a positive polarity voltage of the signal ACTDRV into the non-reverse input terminal(+) of the power operational amplifier 9. Next, the power operational amplifier 9 serves to amplify the difference between the voltage of the signal ACTDRV and the voltage applied at the reverse input terminal(-) by the built-in reference power source VN and to output the result to the transistor 7. The transistor 7 controls the amount of the exciting current $I_0$ supplied from the reference power source $V_{cc}$ to the exciting coil side 1 on the basis of the magnitude of the signal voltage applied to the base of the transistor 7 itself.

When a negative polarity voltage of the signal ACTDRV is applied at the reverse input terminal(-) of the power operational amplifier 27 through the line 29, on the other hand, the power operational amplifier 27 through the line 29, on the other hand, the power operational amplifier 27 serves to amplify the difference between the voltage of the signal ACTDRV and the voltage applied from the built-in reference power source VN to the non-reverse input terminal(+). Then, the transistor 25 serves to control the amount of the exciting current $I_0$ supplied from the reference power source $V_{cc}$ exciting coil side 3 on the basis of the magnitude of the signal voltage applied on the base of the transistor 25 itself.

Figs.2(a) and (b) are waveform diagram showing the signal ACTDRV and the head speed signal sent from the control unit 45. A period T1 denotes a moving control mode period, and a period T2 defined thereafter denotes a position control mode period. As shown in Figs.2(a) and (b), in the moving control mode, the signal ACTDRV has a large absolute value, but in the position control mode, it has a small value.

As shown in Fig.2(b), the head speed is controlled in such a way that it increases at the first half of the period T1 and decreases at the latter half and keeps constant at the period T2.

As set forth above, the control unit 45 applies the signal GAINCUT at low level in the track-following control mode and that at high level in the moving control mode.

Assuming that the signal GAINCUT stays at low level and the transistor 53 is in an off state, the gain G of the voice coil motor driving circuit is;
G OFF = r12/r11/R or
G OFF = r22/r21/R

Assuming that the signal GAINCUT stays at high level and the transistor is in an on state, the gain G of the voice coil motor driving circuit is;
G ON = r12/r11/RG or
G ON = r22/r21/RG
(where RG is a synthesized resistance of RA (resistance value of the resistor 51) and R and is obtained by the equation; RG = (RAxR)/(R + RA))

Consequently, the gain G of the voice coil motor driving circuit has the relation G OFF < G ON.

As set forth above, the present embodiment is designed to connect the resistors 51 and 39 in parallel and makes it possible to allow the transistor 53 to switch the gain G from the track-following control mode to the moving control mode or vice versa.

In the moving control mode, therefore, by increasing the gain G, it is possible to saturate the voice coil motor driving circuit. On the other hand, in the track-following control mode, by decreasing the gain G, it is possible to improve the operation accuracy of the voice coil motor driving circuit with minimal current.

Depending on the moving control mode or the track-following control mode, a dynamic range of an input side for the signal ACTDRV can be adjusted so as to avoid an adverse effect resulting from variations of a resistance value r11 or r12 of each resistor and an input offset voltage of each power operational amplifier 9 or 27.

This embodiment describes the magnetic disk unit to which the present invention is applied, but the invention may be applied to another information recording and reproducing apparatus such as an optical disk unit.

## Claims

1. A head driving circuit comprising; a voice coil motor for moving a head for reading information from or writing it on a disk.
a driving means for supplying current to said voice coil motor in response to a first control signal, and
a gain control means for changing a gain of said driving mens in response to a second control signal.

2. The head driving circuit claimed in claim 1 wherein said gain control means can switch said gain between two stages depending on a moving control mode or a signal control mode.

3. The head driving circuit claimed in claim 1 wherein said disk is a magnetic disk.

4. The head driving circuit claimed in claim 1 wherein said disk is an optical disk.

# F I G. 1

SPEED SENSOR 41

POSITION SENSOR 43

CONTROL UNIT 45

D/A 47

ACTDRV

GAINCNT

# F I G. 2

(a)  ACTDRV

T₁ — T2

(b)  SPEED SIGNAL

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | EP-A-260138 (FUJITSU)<br>* page 2, lines 5 - 56 *<br>* page 3, line 61 - page 4, line 35 *<br>* page 4, line 53 - page 5, line 27 *<br>* page 5, line 65 - page 7, line 45 *<br>* claims 1-4, 13-15; figures 3-6, 8, 10, 13 *<br>--- | 1-4 | G11B21/08<br>G11B5/55<br>G11B7/08 |
| Y | EP-A-249020 (IBM)<br>* page 2, lines 3 - 43 *<br>* page 7, lines 35 - 38; figures 2-3 * | 1 | |
| A | --- | 2, 3 | |
| Y | EP-A-265287 (PIONEER ELECTRONIC CORPORATION)<br>* column 1, line 37 - column 2, line 19 *<br>* column 3, line 52 - column 4, line 19 *<br>* figures 1-4 * | 1 | |
| A | --- | 4 | |
| A | IBM TECHNICAL DISCLOSURE BULLETIN.<br>vol. 17, no. 9, February 1975, NEW YORK US<br>pages 2752 - 2753; R.S.PALMER:<br>"VOLTAGE BOOST FOR SERVO POWER AMPLIFIER"<br>* the whole document *<br>----- | | TECHNICAL FIELDS SEARCHED (Int. Cl.4 )<br><br>G11B |

The present search report has been drawn up for all claims

| Place of search | Date of completion of the search | Examiner |
|---|---|---|
| THE HAGUE | 28 SEPTEMBER 1989 | CALARASANU |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P0401)